Europäisches Patentamt

European Patent Office

Office européen des brevets

(19)

(11) **EP 0 899 221 A1**

(12) **EUROPÄISCHE PATENTANMELDUNG**

(43) Veröffentlichungstag:
**03.03.1999 Patentblatt 1999/09**

(51) Int. Cl.⁶: **B65G 47/96**

(21) Anmeldenummer: **98115806.6**

(22) Anmeldetag: **21.08.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.08.1997 DE 19737351**

(71) Anmelder:
**BERNHARD BEUMER MASCHINENFABRIK**
**D-59269 Beckum (DE)**

(72) Erfinder: **Hintz, Andreas, Dr.**
**59269 Beckum (DE)**

(74) Vertreter:
**Hoormann, Walter, Dr.-Ing. et al**
**FORRESTER & BOEHMERT**
**Franz-Joseph-Strasse 38**
**80801 München (DE)**

(54) **Gliederförderer zum Transport von Stückgut, insbesondere Gepäckstücken**

(57) Gliederförderer zum Transport von Stückgut, insb. zum Langstreckentransport von Gepäckstücken, mit einem aus einer Vielzahl von gelenkig miteinander verbundenen Förderelementen bestehenden, in sich geschlossenen, antreibbaren Förderstrang, dessen Förderelemente jeweils einen an seinen beiden Seiten mit Laufrollen an einer längs der Förderbahn verlaufenden, ortsfesten Führung geführt abgestützten Unterwagen sowie eine an dessen Oberseite angeordnete Tragschale aufweisen, deren Tragboden an einer Aufgabestelle mit einem Stückgutteil zu beschicken ist, und die an einer Abgabestelle aus ihrer Transportstellung in eine seitlich gekippte Abgabestellung zu bringen ist, wobei die Tragschalen (10) jeweils fest mit ihrem Unterwagen (6) verbunden sind, wobei die Führung (8, 9) im Bereich der Abgabestelle (13) so ausgebildet ist, daß jedes den Abgabebereich (13) passierende Förderelement (3) insgesamt aus seiner zuvor eingenommenen, aufgerichteten Transportstellung seitlich zur Abgabeseite hin fortschreitend in eine Abgabestellung gekippt wird und nach Erreichen einer maximalen Kippstellung wieder in seine Transportstellung zurückgekippt wird.

Fig. 4

EP 0 899 221 A1

**Beschreibung**

Die Erfindung betrifft einen Gliederförderer zum Transport von Stückgut, insb. von Gepäckstücken, mit einem aus einer Vielzahl von gelenkig miteinander verbundenen Förderelementen bestehenden, in sich geschlossenen, antreibbaren Förderstrang, dessen Förderelemente jeweils einen an seinen beiden Seiten mit Laufrollen an einer längs der Förderbahn verlaufenden, ortsfesten Führung geführt abgestützten Unterwagen sowie eine an dessen Oberseite angeordnete Tragschale aufweisen, deren Tragboden an einer Aufgabestelle mit einem Stückgutteil zu beschicken ist, und die zwecks seitlicher Abgabe eines aufgenommenen Stückgutteils an einer Abgabestelle aus ihrer Transportstellung in eine seitlich gekippte Abgabestellung zu bringen ist.

Derartige Förderer sind als sog. Sorter aus der Sortier- bzw. Verteiltechnik in unterschiedlichsten Ausgestaltungen bekannt, jedoch für reine Förderaufgaben (also ohne Verteil- bzw. Sortieraufgabe), wie sie u.a. beim Langstreckentransport über mehrere hundert Meter (oder ggf. auch erheblich mehr) vorliegen, schon deshalb nicht verwendet worden, weil man davon ausgegangen ist, daß die einzelnen Förderelemente jeweils zwischen ihren Tragschalen und ihrem an einer Führung geführten Unterwagen eine mit wenigstens einem Kippgelenk versehene Kippeinrichtung aufweisen müßten.

Außerdem ist i.d.R. an jedem Förderelement regelmäßig noch eine Verriegelungseinrichtung erforderlich, mittels welcher ihre Tragschale außerhalb der vorgesehenen Abgabestelle zu verriegeln ist, um ein unbeabsichtigtes Kippen der Tragschale mit Sicherheit zu verhindern.

All dies ist relativ aufwendig, wobei dieser Aufwand zwar in der Sortiertechnik als nicht vermeidbar hingenommen wird, da dort ein von der Tragschale eines Förderelementes abgestütztes Stückgutteil an einer vorgegebenen Abgabestelle von vielen - häufig unmittelbar nebeneinander liegenden - Abgabestellen über einen relativ kurzen Abschnitt der Förderstrecke sicher abgegeben werden muß. Für reine Förderaufgaben erschien dieser Aufwand jedoch bisher (erheblich) zu hoch, da hierbei lediglich eine einzige Abgabestelle (bei Hin- und Rückförderung ggf. eine Abgabestelle je Fördertrum) vorhanden ist.

Derartige Förderaufgaben liegen bspw. innerhalb der Gepäck-Transportsysteme auf Flughäfen vor, wenn Gepäckstücke bspw. über 800 m oder 1,2 km zwischen zwei Terminals (i.a. in beiden Richtungen) transportiert werden müssen.

An dieser Stelle sei darauf verwiesen, daß unter dem in der Praxis und daher auch vor- und nachstehend verwendeten Begriff "Tragschale" nicht notwendigerweise ein schalenförmiges Teil zu verstehen ist, sondern daß eine Tragschale ggf. auch als an ihrer Oberseite im wesentlichen ebene Tragplatte ausgebildet sein kann.

Für derartige Förderaufgaben stehen grundsätzlich konkurrierende Fördereinrichtungen zur Verfügung. So könnte bspw. ein unstetig arbeitendes Zugsystem zum Einsatz kommen. Ein solches ist jedoch schon deshalb unzweckmäßig, weil einem derartigen Förderer bspw. für den obengenannten Einsatzfall regelmäßig eine Sorteranlage nachgeschaltet ist, mittels welcher die Gepäckstücke unter Zuordnung zu den einzelnen Gates oder Pufferstellen sortiert werden, wobei eine automatisierte kontinuierliche Beschickung erheblich zweckmäßiger ist.

Bei grundsätzlich zur Verfügung stehenden gattungsfremden Stetigförderern wie z.B. Bandförderern liegen für derartige Einsatzfälle andere Nachteile vor. So können Gepäckstücke von einem Bandförderer entweder nur überkopf oder durch seitliches Abstoßen mittels eines sog. Pushers abgegeben werden. In beiden Fällen werden die Stückgutteile dabei stark beansprucht und sind nicht schonend abzugeben, zumal bei einem derartigen Einsatz eine verhältnismäßig hohe Fördergeschwindigkeit von bspw. 5 m/s vorgesehen werden muß, um eine hinreichend große Förderleistung zu erzielen.

Der vorliegenden Erfindung liegt die Aufgabe zugrunde, den aus der Sortertechnik bekannten Gliederförderer der eingangs beschriebenen Gattung insb. dahingehend zu verbessern, daß er auch unter wirtschaftlichen Gesichtspunkten für einen Einsatz zum (insb. auch längeren) Streckentransport geeignet ist, indem die Förderelemente unter Fortfall der relativ aufwendigen Kippeinrichtungen erheblich zu vereinfachen sind, wobei - was zunächst widersprüchlich erscheint - dennoch eine Kipp-Entleerung möglich sein und eine Möglichkeit geschaffen werden soll, daß ein Stückgutteil, welches bei Erreichen der stärksten Kippstellung seiner Tragschale nicht sogleich von dieser seitlich abrutscht, dennoch im Abgabebereich sicher und schonend abgegeben wird.

Die Lösung der vorstehenden Rumpfaufgabe besteht erfindungsgemäß darin, daß die Tragschalen jeweils in an sich bekannter Weise fest, d.h. relativ zu ihrem Unterwagen unbeweglich, mit ihrem Unterwagen verbunden sind, wobei die Führung im Bereich der Abgabestelle so ausgebildet ist, daß jedes den Abgabebereich passierende Förderelement insgesamt aus seiner zuvor eingenommenen, aufgerichteten Transportstellung seitlich zur Abgabeseite hin fortschreitend in eine Abgabestellung bewegt ("gekippt") wird, in welcher ein von seiner Tragschale abgestütztes Stückgutteil von dieser abrutscht, und nach Erreichen einer maximalen Kippstellung wieder in seine Transportstellung zurückgekippt wird.

Wie bereits vorstehend angedeutet worden ist, sind zwar gattungsfremde Sorter vorbekannt, bei denen die (nicht kippbaren) Tragschalen jeweils fest mit ihrem Unterwagen verbunden sind und auch an der jeweiligen Abgabestelle in ihrer aufrechten Transportstellung verbleiben. Hierbei handelt es sich jedoch - wie bereits ausgeführt - um Sorter, bei denen die Stückgutteile an der jeweils vorgesehenen Abgabestelle mittels eines seitlich auf das Stückgutteil einwirkenden Pushers od. dgl. abgestoßen oder mittels einer einschwenkbaren Weiche ("Lineal") abgestreift werden, und nicht um sog. Kippförderer.

Der Grundgedanke des erfindungsgemäßen Förderers besteht also im wesentlichen darin, daß an der Abgabestelle bzw. im Abgabebereich nicht nur die Tragschale relativ zu ihrem in seiner aufgerichteten Transportstellung verbleibenden Unterwagen seitlich gekippt wird, was für jedes Förderelement eine entsprechende (Gelenk-)Kippeinrichtung erforderlich macht, sondern daß die an der Führung geführten Förderelemente im Abgabebereich insgesamt seitlich zur Abgabeseite hin gekippt und nach Abgabe des von ihnen jeweils abgestützten Stückgutteils wieder in ihre normale Transportstellung zurückgekippt werden, so daß die Förderelemente - trotz der erzielbaren Kipp-Entleerung - ohne Einzel-Kippeinrichtung und damit äußerst einfach und entsprechend kostengünstig ausgebildet werden können. Es bedarf vielmehr lediglich einer entsprechenden Ausgestaltung der Führung im Abgabebereich, also nur an einer einzigen Stelle je Fördertrum. Der hierfür erforderliche Aufwand beträgt ersichtlich nur einen geringen Bruchteil des für konventionelle Kippschalen-Förderer erforderlichen Aufwandes.

Dabei erstreckt sich der Abgabebereich zwar notwendigerweise (aus Beanspruchungs- und Geräuschgründen) über einen längeren Abschnitt der Förderstrecke als er bei konventionellen Kippschalen-Sortern erforderlich ist, doch ist dieses ersichtlich sowohl technisch als auch wirtschaftlich unkritisch.

Der seitliche Neigungswinkel der Tragböden zur Horizontalen beträgt in deren maximaler Kippstellung wenigstens etwa 35°, damit die Gepäckstücke auch bei relativ hoher Reibung zum Tragboden weitgehend sicher von letzterem abrutschen können.

Um zu verhindern, daß bei extrem hoher Haftreibung zwischen Stückgut und Tragboden, bei einem leichten Verkanten eines Stückgutteils oder einer sonstigen Hemmung ein Stückgutteil nicht im Abgabebereich abgegeben wird, ist bevorzugt vorgesehen, daß der Abgabebereich dieser (unmittelbar) benachbart zu einem Ende des Förderers vorgesehen ist, an dem der Förderstrang in einer Horizontalkurve für seinen Rücklauf umgelenkt wird, wobei sich der Abgabebereich bis in den horizontal gekrümmten Umlenkbereich erstrecken kann, und der Krümmungsradius im Abgabebereich bevorzugt so klein gewählt ist, daß bei der vorgegebenen Fördergeschwindigkeit auf die Förderelemente - und damit auf ein ggf. in der maximalen Kippstellung noch nicht von einer Tragschale abgerutschtes Stückgutteil - eine Fliehkraft (Zentrifugalkraft) ausgeübt wird, die erheblich größer als die an dem Stückgutteil angreifenden Reibungskräfte ist. Dabei verbleiben die Förderelemente also zweckmäßigerweise noch über einen Abschnitt der betreffenden Horizontalkurve in ihrer maximalen Kippstellung und werden erst dann wieder in ihre normale Transportstellung zurückgekippt.

Dieses ist insb. dann wichtig, wenn die Tragböden, wie dieses bevorzugt vorgesehen ist, jeweils so angeordnet sind, daß sie in der normalen Transportstellung entgegen der Kipprichtung seitlich geneigt sind, und wenn die Tragschalen dabei an ihrem der Abgabeseite abgekehrten Längsrand mit einem von ihrem Tragboden hochstehenden Steg od.dgl. (als Anschlag für ein aufgegebenes Gepäckstück) versehen sind, da die im Umlenkbereich auf ein verbliebenes Stückgutteil ausgeübte Zentrifugalkraft dieses anderenfalls gegen den Tragboden drücken würde.

Dieser Neigungswinkel der Tragböden beträgt bevorzugt etwa 10 bis 20°. Ein solcher Winkel reicht regelmäßig aus, um auch bei relativ hohen Fördergeschwindigkeiten und eventuellen Horizontalkurven der Förderbahn eine sichere Positionierung der Stückgutteile auf den Tragschalen zu gewährleisten. Er wird nicht unnötig groß gewählt, um den Gesamt-Kipp- bzw. Schwenkwinkel bis zum Erreichen der maximalen Kippstellung - und damit die Länge des Abgabebereiches - so klein wie möglich zu halten. Diese hängt deshalb in gewisser Weise vom Neigungswinkel der Tragböden in deren Transportstellung und dem Kippwinkel der Förderelemente an der Abgabestelle ab, weil die Führung für die Förderelemente entsprechend "schraubenförmig" verwunden werden muß, und hierfür je Grad Schwenk- bzw. Kippwinkel ein bestimmter Längenabschnitt der Förderstrecke erforderlich ist, um die Führung ohne Beschädigung entsprechend verformen zu können, und auch sicherzustellen, daß die Förderelemente beim Passieren des Abgabebereiches nicht in unzulässiger Weise beansprucht werden.

Im übrigen muß sichergestellt werden, daß jedes Förderelement, welches ja eine nicht unerhebliche Längserstreckung (von z.B. bis zu 2 m und mehr) aufweisen kann, und üblicherweise jeweils an seinem vorderen und hinteren Ende jeweils über seitliche Laufrollen an die Führung bildenden Führungsschienen geführt abgestützt ist, einerseits während des normalen Transportes befriedigend geführt ist, andererseits aber beim Einfahren in den Abgabebereich nicht im Bereich seiner Laufrollen verkantet, da die vorderen Laufrollen ja bereits dann in den Abgabebereich einfahren und von der dort in sich verwundenen Führung seitlich gekippt werden, wenn die hinteren Rollen sich noch im Bereich des "normalen" Streckenabschnittes befinden.

Dem kann bevorzugt dadurch Rechnung getragen werden, daß die hinteren Laufrollen eines Förderelementes jeweils an einem nicht mit der Tragschale verbundenen, hinteren Abschnitt des Unterwagens angeordnet sind, der um eine in Förderrichtung verlaufende Schwenkachse relativ zum vorderen Abschnitt des Unterwagens schwenkbar bzw. gelenkig an diesem angelenkt ist.

Die Führung besteht bevorzugt in an sich bekannter Weise aus zwei mit gegenseitigem Horizontalabstand und zweckmäßigerweise im allgemeinen mit gleichem Abstand zur Förderachse des Förderers entlang der Förderbahn verlaufenden, ortsfesten Führungsschienen. Diese sind mithin ebenfalls - wie der Förderstrang selbst - in sich geschlossen, verlaufen - entsprechend der Laufrollenanordnung - im allgemeinen zweckmäßigerweise parallel nebeneinander, und sind, sofern möglich, zumindest überwiegend horizontal angeordnet.

Es können jedoch auch durchaus Vertikalkurvenabschnitte und schräg zur Horizontalen verlaufende Streckenabschnitte vorhanden sein, wobei der Steigungs- bzw. Neigungswinkel aber selbst dann nicht zu groß sein darf, wenn die Tragschalen an ihrem vorderen und rückwärtigen Querrand mit einem hochstehenden Anschlagsteg versehen sind. Dabei sind die Führungsschienen, wenn sie keine Horizontal- oder Vertikalkurve durchlaufen, linear ausgebildet und können bspw. jeweils aus einem U-förmigen Profil bestehen, wobei die offenen Seiten einander zugekehrt sind, so daß die unteren Schenkel der U-förmigen Führungschienen Lauf- und Führungsflächen für die Laufrollen bilden und die zwischen den Schenkeln verlaufenden Stege der Führungsschienen ggf. weitere Laufflächen für weitere Laufrollen bilden können.

In jedem Falle sind die Führungsschienen so geformt, daß sie im Abgabebereich unter Aufrechterhaltung ihrer gegenseitigen Relativstellung (also ihres gegenseitigen Abstandes und ihrer vorzugsweise vorhandenen Parallelität) aus ihrer zuvor (also während der normalen Förderung der Förderelemente in deren Transportstellung) eingenommenen räumlichen Lage gemeinsam um eine in oder parallel zur Förderrichtung verlaufende Schwenkachse fortschreitend so verschwenkt sind, daß die von ihnen geführten Förderelemente entsprechend dem jeweils erreichten Schwenkwinkel zur Abgabeseite hin fortschreitend gekippt werden bis der von ihnen vorgegebene maximale Schwenk- bzw. Kippwinkel erreicht ist. Danach sind die Führungsschienen entgegen der vorherigen Schwenkrichtung fortschreitend wieder so zurückgeschwenkt, bis sie ihre Transportlage wieder erreicht haben, in welcher die Förderelemente ihre normale Transportstellung einnehmen. Unter dem Begriff "Schwenken" ist in diesem Zusammenhang ersichtlich bzgl. der Führungsschienen kein Bewegungsvorgang, sondern ein Verformungszustand zu verstehen.

Die (Verformungs-)Schwenkachse der Führung kann für alle Querschnitte bzw. Abschnitte der Führung im Abgabebereich eine Gerade sein, die sich durch den Abgabebereich erstreckt. Diese kann in der zentrisch zwischen den beiden Führungsschienen verlaufenden Förderachse des Förderers verlaufen. Dieses hat den Vorteil, daß die Führung bzgl. ihrer Gesamtbreite innerhalb derjenigen Kontur verbleibt, die sie vor und nach dem Abgabebereich einnimmt, wobei - wenn die Abgabeseite benachbart zu der äußeren Führungsschiene vorgesehen ist - mithin die äußere Schiene fortschreitend abgesenkt und näher an die durch die Förderachse verlaufende Vertikalebene herangebogen wird, und wobei die innere Schiene über einen bestimmten Abschnitt der Förderstrecke in gleichem Maße angehoben und an diese Vertikalebene herangebogen ist bis die vorgegebene maximale Kippstellung bzw. Schwenkstellung erreicht ist. Danach verläuft die Verformung der Führungsschienen in umgekehrter Richtung bis das Ende des Abgabebereiches erreicht ist.

Die als Gerade ausgebildete Schwenkachse kann jedoch auch zur Förderachse versetzt sein und grundsätzlich sogar außerhalb der Umrißkontur der Führung liegen. Letzteres ist im allgmeinen unzweckmäßig, weil die Führung dann im Abgabebereich relativ zu ihrem vorherigen Verlauf seitlich ausweicht. Dieses ist jedenfalls dann der Fall, wenn die Schwenkachse ober- oder unterhalb der Führung verläuft.

Unter bestimmten Voraussetzungen kann jedoch ein seitlicher Versatz der Schwenkachse zur Förderachse vorteilhaft sein, und zwar dann, wenn sie seitlich zur Förderachse in Richtung auf die nicht an der Abgabeseite verlaufende innere Führungsschiene versetzt ist, insb. wenn sie dabei im Bereich der inneren Führungsschiene verläuft. Denn dadurch ist zu erreichen, daß der Boden der Tragschale jedes den Abgabebereich passierenden Förderelementes nicht nur in seinem äußeren Abschnitt, sondern auch in seinem inneren Abschnitt lediglich abgesenkt (und nicht angehoben) wird, nachdem er eine horizontale Stellung erreicht hat, wie dieses für eine besonders schonende Stückgutabgabe besonders vorteilhaft ist.

Bevorzugte Ausgestaltungen der vorliegenden Erfindung sind in Unteransprüchen beschrieben.

Die Erfindung ist nachstehend anhand von Ausführungsbeispielen und unter Bezugnahme auf eine weitgehend schematische Zeichnung weiter erläutert. Es zeigt:

Fig. 1   eine teilweise Draufsicht auf einen erfindungsgemäßen Förderer in schematischer Darstellung unter Fortlassung der Führung sowie sonstiger aus der Sortertechnik bekannter Einzelheiten, die für das Verständnis der vorliegenden Erfindung unerheblich sind;

Fig. 2   einen gegenüber Fig. 1 vergrößerten Schnitt in Richtung der Schnittlinie II-II in Fig. 1 gesehen, ebenfalls in vereinfachter, schematischer Darstellung und unter Fortlassung diverser Einzelheiten jedoch mit der Führung;

Fig. 3   einen gegenüber den Fig. 1 und 2 vergrößerten Schnitt durch ein Fördertrum im Bereich einer Abgabestelle bei maximalem Kippwinkel des betreffenden Förderelementes in Richtung der Schnittlinien III-III in Fig. 1 gesehen;

Fig. 4   eine gegenüber Fig. 1 vergrößerte, ebenfalls stark schematisierte Teildraufsicht auf ein Fördertrum nebst Führung im Abgabebereich, wobei im linken Teil von Fig. 4 in gegenüber dem rechten Teil vergrößerter Darstellung einzelne Kippositionen eines Förderelementes in Schnittansichten dargestellt sind, die zu im rechten Teil von Fig. 4 kenntlich gemachten Schnittansichten gehören;

Fig. 5        eine vereinfachte perspektische Ansicht auf drei Unterwagen (=Förderelemente ohne Tragschale);
Fig. 6        eine Darstellung gemäß Fig. 5 mit Tragschalen;
Fig. 7-9     eine Darstellung einer kompakten sog. "Kettenaufnahme", nämlich

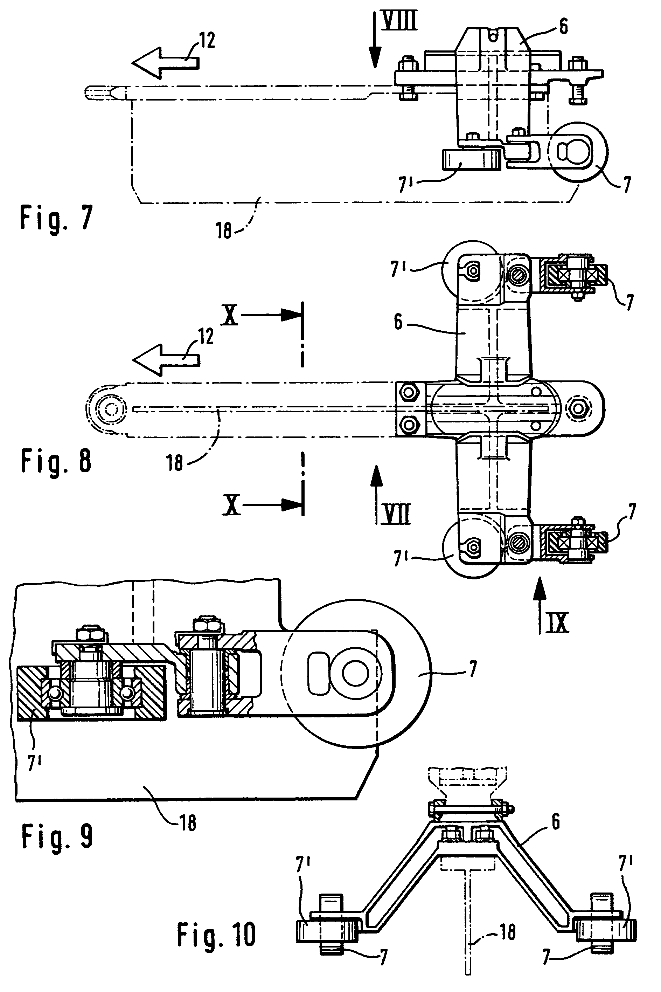

Fig. 7        eine Seitenansicht eines Unterwagens in Richtung des Pfeiles VII in Fig. 8 gesehen;
Fig. 8        eine Draufsicht auf den Unterwagen gemäß Fig. 7 in Richtung des Pfeiles VIII in Fig. 7 gesehen;
Fig. 9        eine Ansicht in Richtung des Pfeiles in Fig. 8; und
Fig. 10      eine vergrößerte Schnittansicht in Richtung der Schnittlinie X-X.

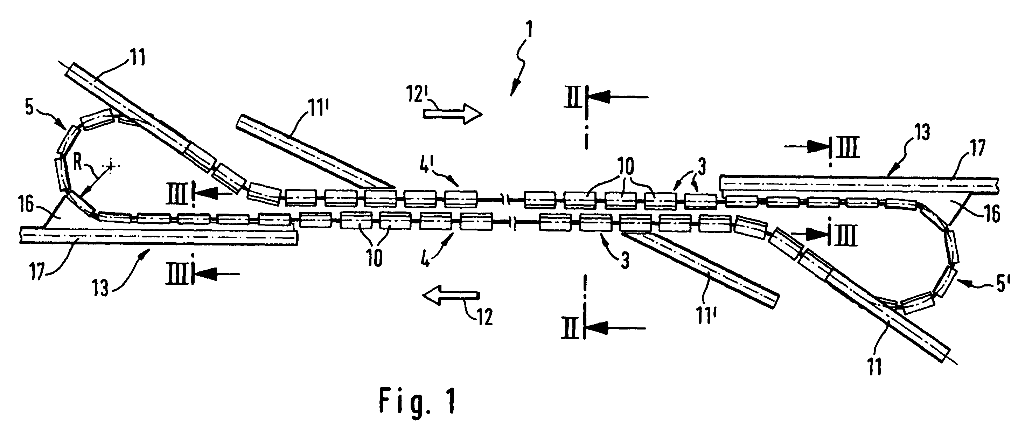

Fig. 1 zeigt einen im ganzen mit 1 bezeichneten Gliederförderer zum Transport von in Fig. 1 nicht eingezeichneten Gepäckstücken 2 zwischen zwei Terminals eines Flughafens. Die Gesamtlänge des Förderers 1 beträgt etwa 850 m; seine Fördergeschwindigkeit beträgt etwa 5 m/s.

Der im wesentlichen horizontal verlaufende Förderstrang des Förderers 1 besteht aus einer Vielzahl von gelenkig miteinander verbundenen Förderelementen 3, die auch als Fahrwagen bezeichnet werden. Der Förderstrang ist in sich geschlossen. Die beiden Trume 4, 4' des Förderstrangs verlaufen im wesentlichen über die gesamte Förderstrecke parallel nebeneinander und sind an den beiden Enden 5 bzw. 5' des Förderers 1 jeweils in einer Horizontalkurve umgelenkt. Der Förderstrang wird in an sich bekannter Weise durch einen im wesentlichen nicht dargestellten Linearmotor angetrieben.

Die Förderelemente 3 weisen jeweils einen an seinen beiden Seiten mit Laufrollen 7 versehenen Unterwagen 6 auf, der an einer längs der Förderbahn verlaufenden, ortsfesten Führung 8, 9 geführt abgestützt ist, und zwar sind in bekannter Weise jeweils am vorderen und hinteren Ende des Unterwagens 6 zwei Laufrollen 7 mit horizontaler Achse angeordnet. Außerdem sind noch Laufrollen 7' mit vertikaler Achse vorgesehen, wie dieses ebenfalls bereits aus der Sortertechnik hinlänglich bekannt ist. Zwei einander benachbarte Unterwagen 6, 6 sind jeweils über ein Kugelgelenk 19 gelenkig miteinander verbunden.

An der Oberseite jedes Unterwagens 6 ist eine Tragschale 10 angeordnet, die mit dem Unterwagen 6 fest verschraubt ist.

In Fig. 1 sind von den Förderelementen 3 lediglich deren Tragschalen 10 dargestellt. Diese können entweder durch eine über dem betreffenden Fördertrum 4 bzw. 4' angeordnete Aufgabeeinrichtung 11 oder eine seitlich zum Förderstrang geführte Aufgabeeinrichtung 11' jeweils mit einem Stückgutteil 2 beschickt werden. Derartige Aufgabeeinrichtungen 11, 11' sind aus der Sortertechnik ebenfalls hinlänglich bekannt und daher weder im einzelnen dargestellt noch auch beschrieben. Sind einem Fördertrum 4 bzw. 4' mehrere Aufgabeeinrichtungen 11 bzw. 11' zugeordnet, so wird durch geeignete Überwachungs- und Steuerungseinrichtungen dafür gesorgt, daß ein bereits mit einem Stückgutteil 2 beschicktes Förderelement 3 nicht noch mit einem weiteren Stückgutteil beschickt wird. Bei dem Förderer 1 gem. Fig. 1 können mithin beide Trume 4, 4' zur Förderung genutzt werden, und zwar verläuft die Förderrichtung des Trums 4 in Richtung des Pfeiles 12, während die Förderrichtung des Trumes 4' in Richtung des Pfeiles 12' in entgegengesetzter Richtung verläuft.

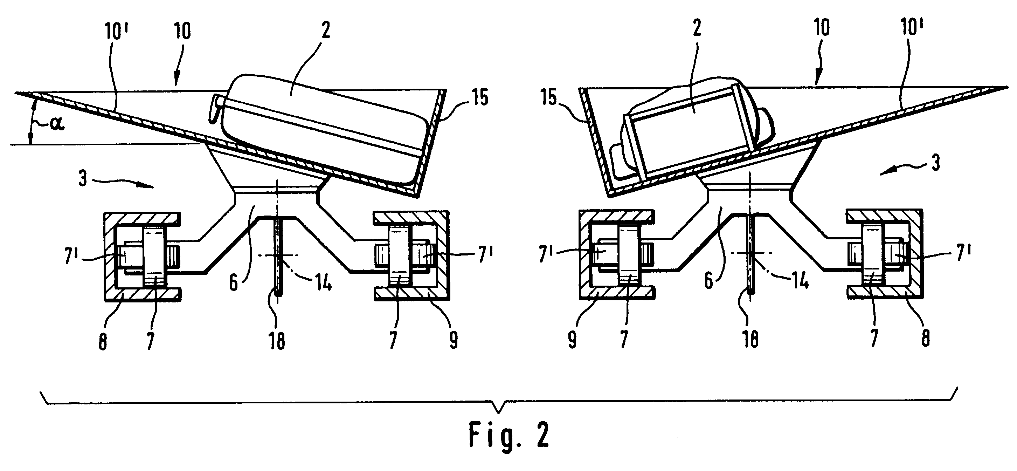

Die Förderelemente 3 sind im wesentlichen auf der gesamten Förderstrecke (auch bereits an den Aufgabestellen) aufgerichtet, wie dieses bspw. aus Fig. 2 erkennbar ist, und werden in dieser Stellung (in jedem Trum 4, 4') einer Abgabestelle, (genauer gesagt einem Angabebereich) 13 zugefördert, in dem ihre Tragschalen 10 jeweils aus ihrer Transportstellung in eine seitlich gekippte Abgabestellung zu bringen sind. Dieses geschieht bei dem erfindungsgemäßen Förderer 1 nicht durch seitliches Abkippen der Tragschale 10 relativ zum Unterwagen 6, sondern durch seitliches Kippen der gesamten Fördereelemente 3 mittels der Führung 8, 9 wie folgt:

Die Führung besteht aus zwei U-förmigen, mit gegenseitigem Horizontalabstand zur Förderachse 14 parallel nebeneinander verlaufenden Führungsschienen 8, 9, die längs der "normalen" Förderstrecke (also außerhalb der Abgabebereiche 13) gestreckt horizontal verlaufen und in den Abgabebereichen 13 jeweils so ge- bzw. verformt sind, daß sie dort unter Aufrechterhaltung ihrer gegenseitigen Relativstellung fortschreitend verwunden bzw. um eine Schwenkachse geschwenkt werden, daß dieses ein fortschreitendes Kippen der einen Abgabebereich 13 passierenden Förderelemente 3 zur Folge hat.

Bevor dieses im einzelnen beschrieben wird, sei zunächst darauf verwiesen, daß die Tragböden 10' der Tragschalen 10 jeweils so angeordnet sind, daß sie in der normalen Tragstellung entgegen der zur Abgabeseite hin gerichteten Kipprichtung seitlich um einen Winkel $\alpha$ von 15° geneigt sind, wobei die Tragschalen 10 an ihrem der Abgabeseite abgekehrten Längsrand mit einem von ihrem Tragboden 10 hochstehenden Steg 15 versehen sind, an den sich die Stückgutteile 2 nach ihrer Aufgabe jeweils anlegen, so daß ein sicherer Transport gewährleistet ist.

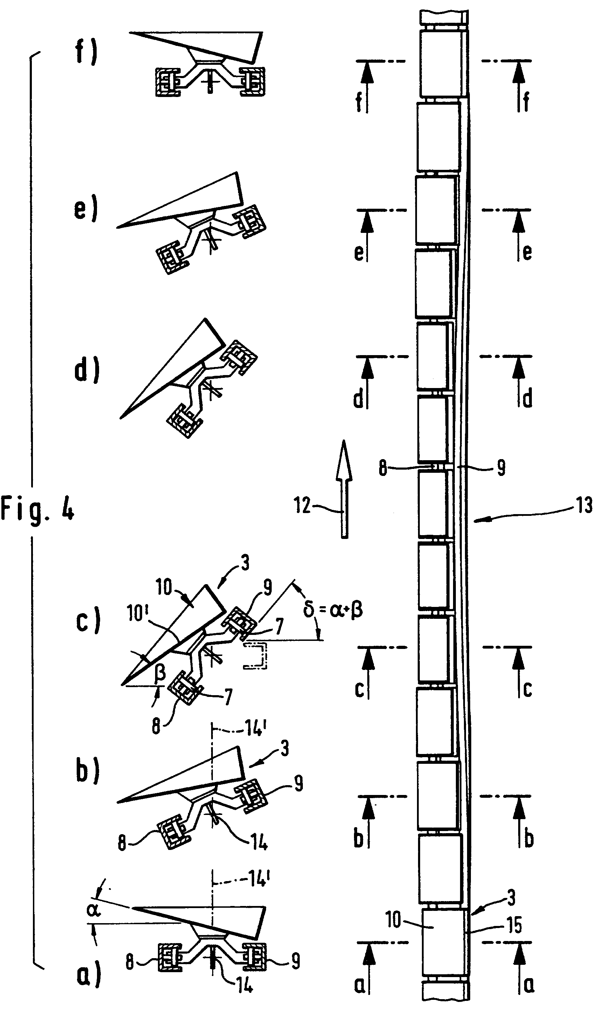

Von Beginn des Abgabebereiches 13 an ist die aus den beiden Führungsschienen 8, 9 bestehende Führung fortschreitend um die Förderachse 14 zur Abgabeseite hin gleichsam in sich verwunden, nämlich um die zugleich die Schwenkachse bildende Förderachse 14 geschwenkt, wie sich insb. aus Fig. 4 ergibt. Dabei befindet sich das untere im rechten Teil von Fig. 4 erkennbare Förderelement 3 noch in seiner Transportstellung. Die Führungsschienen 8, 9 verlaufen mithin noch horizontal (gem. Fig. 2), wie dieses aus der links daneben befindlichen Fig. 4a erkennbar ist, die einen Schnitt gem. der Schnittlinie a-a zeigt. Kurz danach beginnt (in Förderrichtung 12 gesehen) eine durch Verschwenken um die Förderachse 14 gebildete Verformung der Führung 8, 9, so daß an der Schnittlinie b-b bereits eine Zwischen-Kippstellung des gesamten Förderelementes 3 erreicht ist, wie sie aus Fig. 4b erkennbar ist.

Dabei wird also die äußere Führungsschiene fortlaufend abgesenkt und näher an die durch die Förderachse 14 verlaufende Vertikalebene 14' heranbewegt, während die innere Führungsschiene 9 aus ihrer Ausgangsstellung gem. Fig. 4a in gleicher Weise nach oben "bewegt" wird (= geformt ist). Dieses setzt sich kontinuierlich fort, bis an der Schnittlinie c-c gem. Fig. 4c die maximale Kippstellung des Förderelementes 3 erreicht ist, in welcher der Tragboden 10' der Tragschale 10 einen Neigungswinkel $\beta$ zur Horizontalen von 35° hat, also aus seiner Ausgangsstellung um einen Winkel $\delta = \alpha + \beta$ von insgesamt 50° gekippt worden ist. Entsprechendes gilt für die Schienen 8, 9 bzw. deren Schenkel und Stege.

Diese maximale Kippstellung wird über einen wählbaren Längenabschnitt der Förderstrecke beibehalten. Anschließend erfolgt ein Rückschwenken jedes den Abgabebereich 13 passierenden Förderelementes 3, wie dieses aus den Fig. 4d-f erkennbar ist, die jeweils die Stellung eines Förderelementes 3 an der Schnittlinie d-d, e-e bzw. f-f wiedergeben.

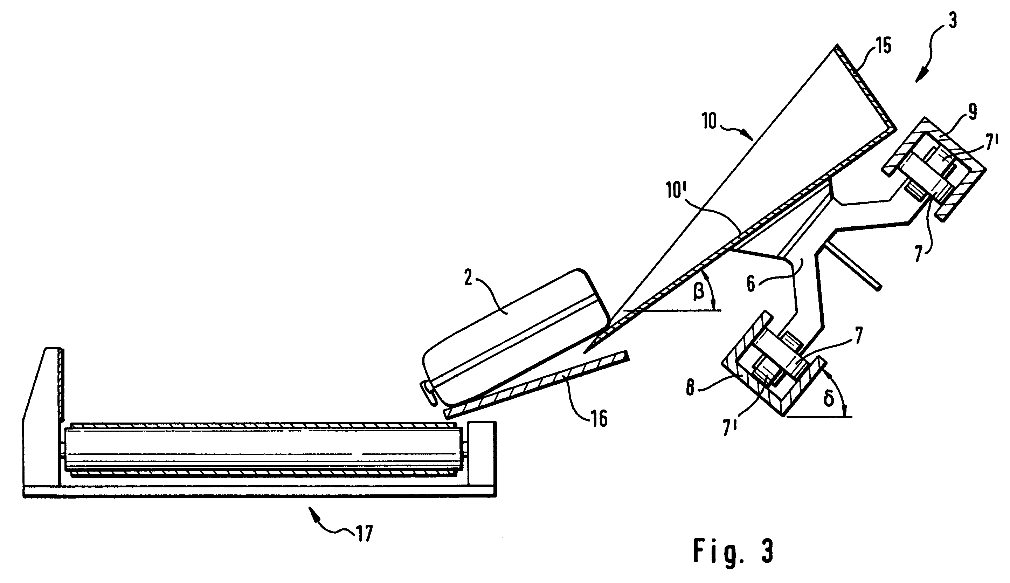

Dabei rutscht mithin ein Stückgutteil 2 spätestens bei Erreichen des Schwenkwinkels $\delta$ vom Tragboden 10' der betreffenden Tragschale 10 ab, wie dieses aus Fig. 3 erkennbar ist, und gelangt über eine Rutsche 16, deren Neigung ggf. einstellbar ist, auf einen parallel zur Förderrichtung verlaufenden Abförderer 17, der die Gepäckstücke 2 einer Sorteranlage zuführt.

Um sicherzustellen, daß die Gepäckstücke 2 auch tatsächlich im Abgabebereich abgegeben werden, sind die Abgabebereiche 13 jedes Trums 4 bzw. 4' jeweils unmittelbar benachbart zum Ende des Förderers 1 vorgesehen, an dem der Förderstrang in einer Horizontalkurve für seinen jeweiligen Rücklauf umgelenkt wird, und erstrecken sich bis in den horizontal gekrümmten Umlaufbereich 5 bzw. 5' am Ende des Förderers 1, wie aus Fig. 1 erkennbar ist, wobei der Krümmungsradius R (wenigstens im Abgabebereich 13) so klein gewählt ist, daß bei der vorgesehenen Fördergeschwindigkeit auf die Förderelemente 3 und damit ggf. noch auf diesen verbliebene Stückgutteile 2 eine Zentrifugalkraft ausgeübt wird, die erheblich größer als die an dem Stückgutteil 2 angreifenden Reibungskräfte ist, so daß jedes Stückgutteil 2 mit Sicherheit von dem Förderer 1 abgegeben wird.

Wie bereits ausgeführt worden ist, wird der Förderer 1 von einem Linearmotor angetrieben, von dem in den Querschnittsdarstellungen der Einfachheit halber lediglich das sog. Schwert 18 angedeutet ist, da ein derartiger Antrieb für als Sorter eingesetzte Gliederförderer hinlänglich bekannt ist.

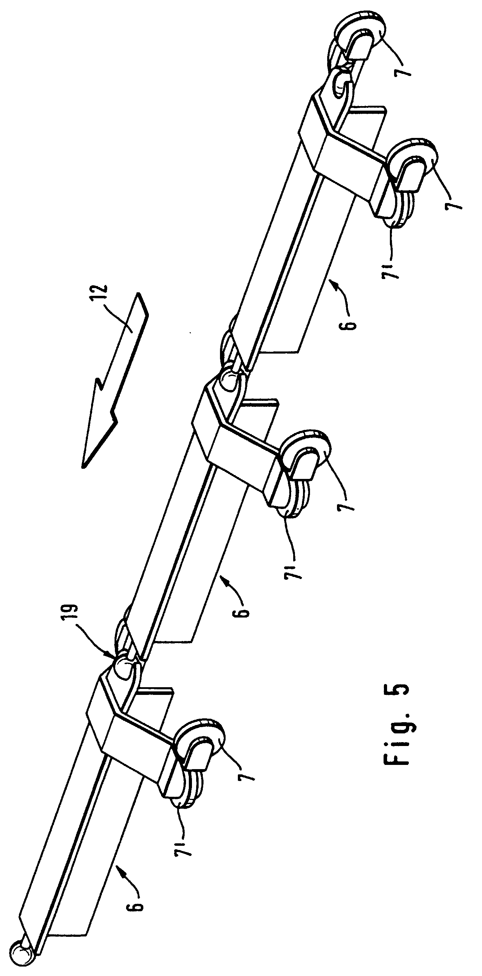

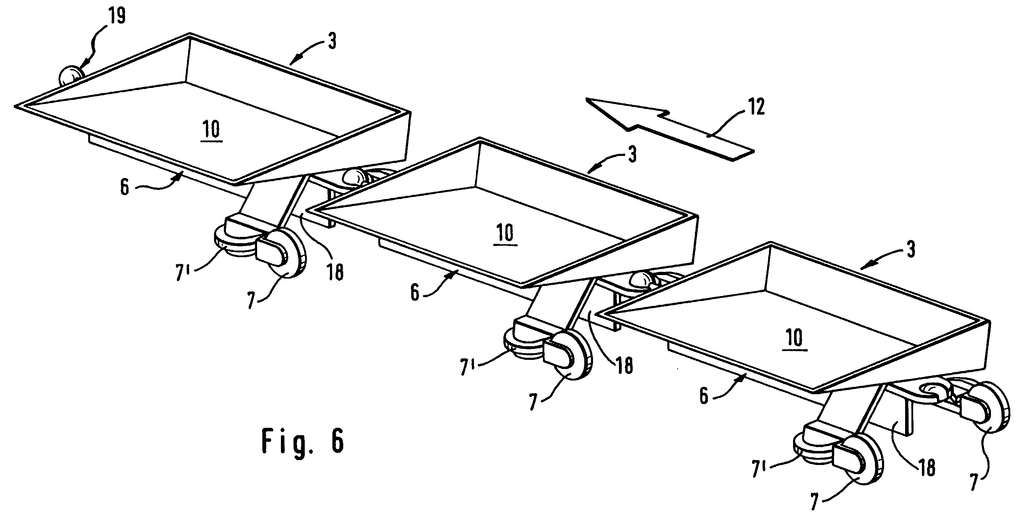

Insbesondere aus den Fig. 5-10 ist ersichtlich, wie die hinteren Laufrollen 7 eines Förderelementes 3 jeweils am hinteren Abschnitt des Unterwagens 6 angeordnet sind. Da auch eine solche Ausbildung der Förderelemente 3 von konventionellen Kippschalen-Förderern her bereits bekannt ist, um dort in Horizontal- oder Vertikalkurven ein Verblokken zu verhindern, erscheint eine detaillierte Beschreibung entbehrlich.

Mit dem erfindungsgemäßen Gliederförderer 1 wurde mithin ein Förderer geschaffen, der sich insb. auch für einen Langstreckentransport von Gepäckstücken od.dgl. mit relativ hoher Fördergeschwindigkeit in wirtschaftlich befriedigender und technisch höchst zweckmäßiger Weise einsetzen läßt, da seine einzelnen Förderelemente (deren gegenseitige gelenkige Verbindung in den Zeichnungen ebenfalls nicht im einzelnen dargestellt sind, weil sie aus der Sortertechnik an sich bekannt sind) außerordentlich einfach (ohne jegliche Kippeinrichtungen) ausgebildet werden können und dennoch eine schonende und für die Weiterverarbeitung der Stückgutteile zweckmäßige Kippentleerung möglich ist.

```
                      Bezugszeichenliste
                      ==================
```

```
        1     (Glieder-) Förderer

        2     Stückgutteile (Gepäckstücke)

        3     Förderelemente

        4,    4' Trume

        5,    5' Enden (von 1)

        6     Unterwagen (von 3)

        7,    7' Laufrollen

        8     Führungsschiene        ⎫
                                      ⎬  Führung
        9     Führungsschiene        ⎭

        10    Tragschale        10'  Tragboden (von 10)

        11,   11' Aufgabeeinrichtung

        12,   12' Pfeil (Förderrichtung)

        13    Abgabebereich

        14    Förderachse (= Schwenkachse) 14'
              Vertikalebene (durch 14)

        15    Steg (von 10)

        16    Rutsche

        17    Abförderer

        18    Schwert

        19    Kugelgelenk
```

**Patentansprüche**

1. Gliederförderer zum Transport von Stückgut, insb. zum Langstreckentransport von Gepäckstücken, mit einem aus einer Vielzahl von gelenkig miteinander verbundenen Förderelementen bestehenden, in sich geschlossenen, antreibbaren Förderstrang, dessen Förderelemente jeweils einen an seinen beiden Seiten mit Laufrollen an einer längs der Förderbahn verlaufenden, ortsfesten Führung geführt abgestützten Unterwagen sowie eine an dessen Oberseite angeordnete Tragschale aufweisen, deren Tragboden an einer Aufgabestelle mit einem Stückgutteil zu beschicken ist, und die an einer Abgabestelle aus ihrer Transportstellung in eine seitlich gekippte Abgabestellung zu bringen ist, dadurch gekennzeichnet, daß die Tragschalen (10) jeweils fest mit ihrem Unterwagen (6) verbunden sind, wobei die Führung (8, 9) im Bereich der Abgabestelle so ausgebildet ist, daß jedes den Abgabebereich (13) passierende Förderelement (3) insgesamt aus seiner zuvor eingenommenen, aufgerichteten Transportstellung seitlich zur Abgabeseite hin fortschreitend in eine Abgabestellung gekippt wird und nach Erreichen einer maximalen Kippstellung wieder in seine Transportstellung zurückgekippt wird.

2. Gliederförderer nach Anspruch 1, dadurch gekennzeichnet, daß der Abgabebereich (13) unmittelbar benachbart

EP 0 899 221 A1

zu einem Ende (5 bzw. 5') des Förderers (1) angeordnet ist, an dem der Förderstrang in einer Horizontalkurve für seinen Rücklauf umgelenkt wird, und sich bis in den gekrümmten Umlenkbereich erstreckt, wobei der Krümmungsradius (R) im Abgabebereich (13) so klein gewählt ist, daß bei der vorgegebenen Fördergeschwindigkeit auf die Förderelemente (3) - und damit auf ein ggf. in der maximalen Kippstellung noch nicht von einer Tragschale (10) abgerutschtes Stückgutteil (2) - eine Fliehkraft ausgeübt wird, die erheblich größer als die an dem Stückgutteil (2) angreifenden Reibungskräfte ist.

3. Gliederförderer nach Anspruch 1 oder 2, dadurch gekennzeichnet, daß der seitliche Neigungswinkel der Tragböden (10') zur Horizontalen in der maximalen Kippstellung wenigstens etwa 35° beträgt.

4. Gliederförderer nach einem oder mehreren der vorhergehenden Ansprüche, dadurch gekennzeichnet, daß die Tragböden (10') jeweils so angeordnet sind, daß sie in der Transportstellung entgegen der Kipprichtung seitlich geneigt sind, und daß die Tragschalen (10) an ihrem der Abgabeseite abgekehrten Längsrand mit einem von ihrem Tragboden (10') hochstehenden Steg (15) od.dgl. versehen sind.

5. Gliederförderer nach Anspruch 4, dadurch gekennzeichnet, daß der Neigungswinkel ($\alpha$) der Tragböden (10') in der Transportstellung etwa 10 bis 20° beträgt.

6. Gliederförderer nach einem oder mehreren der vorgehenden Ansprüche, dadurch gekennzeichnet, daß die Führung (8, 9) aus zwei mit gegenseitigem Horizontalabstand und im allgemeinen mit gleichem Abstand zur Förderachse (14) entlang der Förderbahn verlaufenden Führungsschienen (8, 9) mit Führungsflächen für die Laufrollen (7, 7') besteht, wobei die Führungsschienen (8, 9) im Abgabebereich (13) so geformt sind, daß sie aus ihrer zuvor eingenommenen räumlichen Lage gemeinsam um eine in der oder parallel zur Förderachse (14) verlaufende Schwenkachse fortschreitend so verschwenkt sind, daß die von ihnen geführten Förderelemente (3) entsprechend dem jeweils erreichten Schwenkwinkel ($\beta$) zur Abgabe hin fortschreitend gekippt werden, und daß die Führungsschienen (8, 9) nach Erreichen des maximal vorgesehenen Schwenkwinkels entgegen der vorherigen Schwenkrichtung fortschreitend wieder bis in die Transportlage zurückgeschwenkt sind.

7. Gliederförderer nach Anspruch 6, dadurch gekennzeichnet, daß die (Verformungs-)Schwenkachse (14) der Führung (8, 9) an allen Stellen des Abgabebereiches (13) eine sich durch den Abgabebereich (13) erstreckende Gerade ist.

8. Gliederförderer nach Anspruch 7, dadurch gekennzeichnet daß die Schwenkachse (14) in der zentrisch zwischen den beiden Führungsschienen (8, 9) verlaufenden Förderachse (14) liegt.

9. Gliederförderer nach Anspruch 7, dadurch gekennzeichnet, daß die Schwenkachse seitlich zur Förderachse (14) in Richtung auf die nicht an der Abgabeseite verlaufende innere Führungsschiene (9) versetzt ist.

10. Gliederförderer nach Anspruch 9, dadurch gekennzeichnet, daß die Schwenkachse im Bereich der inneren Führungsschiene (9) verläuft.

11. Gliederförderer nach einem oder mehreren der vorhergehenden Ansprüche, dadurch gekennzeichnet, daß die hinteren Laufrollen (7) eines Förderelementes (3) jeweils an einem nicht mit der Tragschale (10) verbundenen hinteren Abschnitt des Unterwagens (6) angeordnet sind, der um eine in Förderrichtung verlaufende Schwenkachse relativ zum vorderen Abschnitt des Unterwagens (6) schwenkbar ist bzw. gelenkig an diesem angelenkt ist.

8

Fig. 1

Fig. 2

EP 0 899 221 A1

Fig. 3

EP 0 899 221 A1

Fig. 4

Fig. 5

Fig. 6

Fig. 7

Fig. 8

Fig. 9

Fig. 10

Europäisches
Patentamt

**EUROPÄISCHER RECHERCHENBERICHT**

Nummer der Anmeldung

EP 98 11 5806

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 038 184 A (FENNER CO LTD J H) 21. Oktober 1981 * Seite 7, Zeile 5 - Seite 9, Zeile 22; Abbildungen 1,2 * --- | 1 | B65G47/96 |
| A | GB 949 244 A (STÜBBE) * Seite 2, Zeile 66 - Seite 3, Zeile 49; Abbildungen * --- | 1 | |
| A | GB 2 073 691 A (CANZIANI F) 21. Oktober 1981 * Seite 1, Zeile 32 - Zeile 66 * ----- | 1 | |
| | | | **RECHERCHIERTE SACHGEBIETE (Int.Cl.6)** B65G |

Der vorliegende Recherchenbericht wurde für alle Patentansprüche erstellt

| Recherchenort | Abschlußdatum der Recherche | Prüfer |
|---|---|---|
| BERLIN | 17. November 1998 | von Arx, H |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 98 11 5806

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-1998

| Im Recherchenbericht angeführtes Patentdokument | | Datum der Veröffentlichung | Mitglied(er) der Patentfamilie | | Datum der Veröffentlichung |
|---|---|---|---|---|---|
| EP 0038184 | A | 21-10-1981 | AU | 6930481 A | 15-10-1981 |
| | | | ZA | 8102347 A | 28-04-1982 |
| GB 949244 | A | | KEINE | | |
| GB 2073691 | A | 21-10-1981 | DE | 3104740 A | 26-11-1981 |
| | | | FR | 2480631 A | 23-10-1981 |
| | | | US | 4399904 A | 23-08-1983 |

EPO FORM P0461

Für nähere Einzelheiten zu diesem Anhang : siehe Amtsblatt des Europäischen Patentamts, Nr.12/82